# EUROPÄISCHE PATENTSCHRIFT

(11) **EP 1 102 534 B1**
(45) Veröffentlichungstag und Bekanntmachung des Hinweises auf die Patenterteilung: **02.05.2003**
(21) Anmeldenummer: 99934692.7
(22) Anmeldetag: 14.07.1999
(51) Int. Cl.: A01N 43/52, A01N 47/38, A01N 43/78, A01N 43/30, A01N 33/08, A01N 33/04, A01N 43/653, A01N 43/50, A01N 37/10, A01N 25/04, B27K 3/50

(54) **VERFAHREN ZUR BEHANDLUNG VON HOLZ GEGEN DEN BEFALL DURCH HOLZSCHÄDIGENDE PILZE**
METHOD FOR TREATING WOOD AGAINST THE ATTACK OF HARMFUL FUNGI
PROCEDE POUR TRAITER LE BOIS CONTRE LES ATTAQUES PAR DES CHAMPIGNONS NUISIBLES

(30) Priorität: 28.07.1998 DE 19834028
(43) Veröffentlichungstag der Anmeldung: 30.05.2001
(73) Patentinhaber: Dr. Wolman GmbH, D-76547 Sinzheim (DE)
(72) Erfinder: KOBER, Reiner, D-67136 Fussgönheim (DE); PARG, Adolf, D-67098 Bad Dürkheim (DE); KARDORFF, Uwe, D-68159 Mannheim (DE); GÖTTSCHE, Reimer, D-76532 Baden-Baden (DE)
(74) Vertreter: Stark, Vera, Dr.
(86) Internationale Anmeldenummer: EP9904968
(87) Internationale Veröffentlichungsnummer: WO00005955

(56) Entgegenhaltungen:
- EP-A- 0 261 492
- EP-A- 0 289 356
- WO-A-88/06841
- WO-A-95/01722
- WO-A-97/39865
- US-A- 5 013 748

## Beschreibung

Die vorliegende Erfindung betrifft mehrphasige wäßrige Suspensionsemulsionen und deren Verwendung zur Behandlung von Holz gegen den Befall durch holzschädigende Pilze.

Die fungizide Wirkung von Fenpropimorph (4-[3-{4-tert.-butylphenyl}-2-methylpropyl]-2,6-cis-dimethylmorpholin) ist allgemein bekannt (vgl. DE-A 26 56 747).

Es ist ferner bekannt, Triazolverbindungen im Holzschutz einzusetzen [Propiconazol: US-A 4 079 062; Tebuconazol: EP-A 40 345 bzw. EP-A 52 424; Cyproconazol: EP-A 131 684 bzw. EP-A 555 186].

Aus der WO-A 95/16349 sind fungizide Mischungen und sie enthaltende Mittel für den Pflanzenschutz bekannt, welche als Wirksubstanzen Fenpropimorph und eine Triazolverbindung enthalten.

Aus der EP-A 72 156 ist die synergistische Wirkung einer Mischung von Fenpropimorph und Prochloraz gegen phytopathogene Pilze bekannt.

Auch synergistische Mischungen von Triazolverbindungen sind im Holzschutz geläufig [Propiconazol + Tebuconazol: EP-A 393 746].

Die DE-A 43 40 853 lehrt eine synergistische Mischung zur Verwendung im Holzschutz, welche neben einer Kupferverbindung und einem Alkanolamin eine Triazolverbindung und ein weiteres Fungizid, beispielsweise Fenpropimorph, enthält.

Weiterhin ist aus der EP-A 425 857 die synergistische Wirkung einer Mischung aus Fenpropimorph und Epoxiconazol gegen Schadpilze an Materialien bekannt.

Die WO 97/39865 beschreibt synergistische Mischungen aus Fenpropimorph und verschiedenen Triazolen zur Verwendung im Holzschutz. Die Kombination solcher Mischungen mit Benzimidazolen bzw. diese freisetzenden Vorstufen wird nicht beschrieben.

In der EP 707 445 werden Suspoemulsionen auf der Basis des Triazols Epoxiconazol für den Pflanzenschutz beschrieben. Die dort verwendeten Lösemittel sind jedoch für die Anwendung im Holzschutz nur wenig geeignet, da diese aufgrund ihres hohen Dampfdrucks sich relativ schnell verflüchtigen, was zur Destabilisierung der Ölphase bzw. zum Brechen der Emulsion führen kann. Darüber hinaus besteht für die meisten der in der EP-A 707,745 genannten Lösungsmittel in geschlossenen Hallen das Problem der Geruchsbelästigung, wenn an einen Einsatz als Holzbehandlungsmittel gedacht wird.

Desweiteren unterscheiden sich die Behandlungssysteme im Pflanzenschutz und Holzschutz sehr stark voneinander und dahingehend, dass man in der Regel bei wäßrigen Pflanzenschutz-Tankmix-Spritzbrühen lediglich eine Emulsionstabilität von in der Regel weniger Stunden benötigt und zusätzlich dann noch diese Tankmixe noch rührwerksunterstützt appliziert werden können. Im Holzschutz sollen dagegen wäßrige Behandlungssysteme über Wochen und Monate stabil sein. Dabei werden typischerweise die vom Holz verbrauchten Emulsionen, Suspoemulsionen oder Mikroemulsionen durch mit Wasser neu angesetzte Behandlungskonzentrate aufgefüllt, ohne daß hierbei die Stabilität einer Tauchbeckenmischung beeinträchtigt werden darf.

Somit unterliegen wäßrige Emulsionen, Mikroemulsionen oder z. B. Suspoemulsionen im Gegensatz zum Pflanzenschutz im Holzschutz völlig anderen Qualitätskriterien, so dass nur ansatzweise formuliertechnische Problemlösungen gemäß Stand der Technik aus dem Pflanzenschutz in den Holzschutz übertragen werden können.

Formulierungen mit Carbendazim (BCM) als Biocide, Fungizide und Holzschutzmittel sind in der Literatur vielfach beschrieben. Dabei stellt sich für BCM das Problem, dass praktisch keine wasserunlöslichen Lösemittel bekannt sind, die in der Lage sind, BCM in hoher Konzentration zu lösen und somit mit Tensiden als Emulsion bzw. Mikroemulsion zu stabilisieren. Wasserlösliche Lösungsmittel würden nach der starken Verdünnung dagegen wieder zum Ausfällen bzw. Auskristallisieren von BCM führen.

Ein Ausweg bieten hier zunächst Salze von BCM, wobei unter Protonierung mit Mineralsäuren der sehr schwach basische Charakter von BCM genutzt wird. So werden in CA 97:51133 Phosphorsäure-Salze von BCM beschrieben. Derartige BCM-Salze sind allerdings in hoher Verdünnung, insbesondere bei Verwendung schwach basischer Leitungswässer für die Praxis völlig ungeeignet, da es sehr schnell zur Deprotonierung, Kristallbildung bzw. Ausfällung von BCM kommen würde, das dann grobpartikulär im Bereich >>10 mm vorliegt, praktisch nicht mehr wirksam ist und sehr schnell sedimentiert.

Ferner sind niedrige pH-Werte häufig verantwortlich für Korrosion von Holzschutz-Applikationsanlagen.

Eine weitere Möglichkeit bietet sich gemäß JP 03251507 dadurch, dass man die Sedimentation bzw. das Kristallwachstum von BCM mittels Xanthanen unterdrückt. Allerdings führt dies in der Regel zu sehr hohen Xanthan-Anteilen von ca. 0,2% bezogen auf die Anwendungskonzentration bzw. den Tank-bzw. Tauchbeckenmix. Bezogen auf die Fertigformulierung müßten dann allerdings die Xanthane wie die Wirkstoffe im 100 g-Bereich der Fertigformulierung eingesetzt werden. Dies ist technisch nicht möglich, da sich bereits ab ca. 0,2% Xanthan Gum-Anteilen im Suspoemulsions-Konzentrat eine extrem hohe Viskosität einstellt und derartige Formulierungen nicht mehr fließfähig sind und eher gel-artige bzw. bereits feste Produkte liefern, die verfahrenstechnisch völlig ungeeignet sind.

Der vorliegenden Erfindung lag daher als Aufgabe die Entwicklung von wirkstoffmäßig hochkonzentrierten und flüssigen Formulierungen mit Carbendazim und Wirkstoffen aus der Klasse der Morpholine, Amine und/oder Cycloamine bzw. Triazole zugrunde, die als Suspensionsemulsionen zur Applikation im Holzschutz eine gute Lagerstabilität der Suspoemulsion und eine gute Langzeit-Stabilität des wäßrigen Anwendungsmittels aufweisen. Ferner sollte soweit möglich auf leicht verdampfbare, geruchsbelästigende, gesundheitsgefährdende und insbesondere chlorhaltige Lösemittel verzichtet werden. Außerdem sollten die Wirkstoffe in hoher Konzentration formuliert werden können.

Mit den erfindungsgemäßen Systemen sollte es möglich werden, ökonomisch- und ökologisch-verbesserte Verfahren für den Holzschutz aufzuzeigen.

Erfindungsgemäß wird diese Aufgabe gelöst durch mehrphasige wäßrige Suspensionsemulsionen, enthaltend als wesentliche Komponenten
a) 1 bis 50 Gew.% eines fungiziden Wirkstoffs aus der Klasse der Benzimidazole oder der sie freisetzenden Vorstufen der Formeln I.1. bis I.4 als mikrosuspendierte Feststoffteilchen,
   Methyl 1-(butylcarbamoyl)-benzimidazol-2-yl-carbamat (I.1) 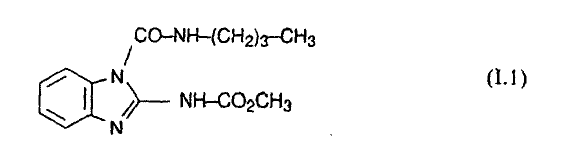
   Methyl benzimidazol-2-yl-carbamat (I.2) 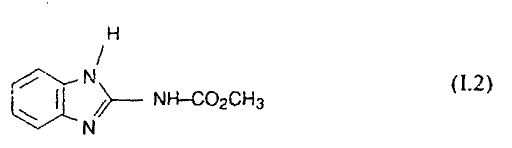
   2-(2'-Furyl)-benzimidazol (I.3) 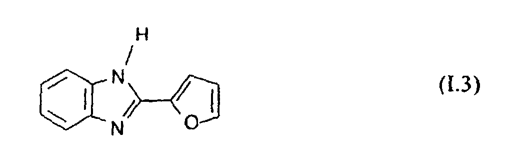
   2-(1,3-Thiazol-4-yl)-benzimidazol (I.4) 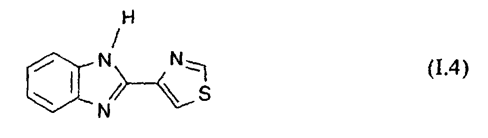
b) einer Emulsion enthaltend
   b₁) einen fungiziden wirkstoff ausgewählt aus Verbindungen der Formeln II.1. bis II.5 und 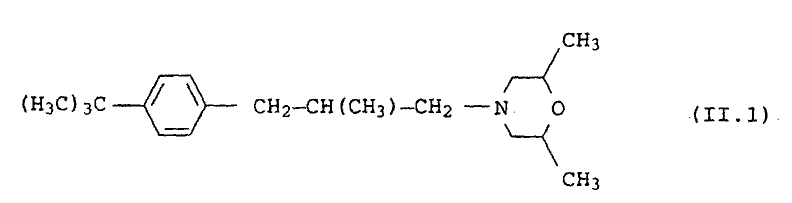 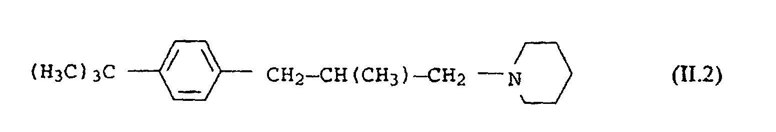 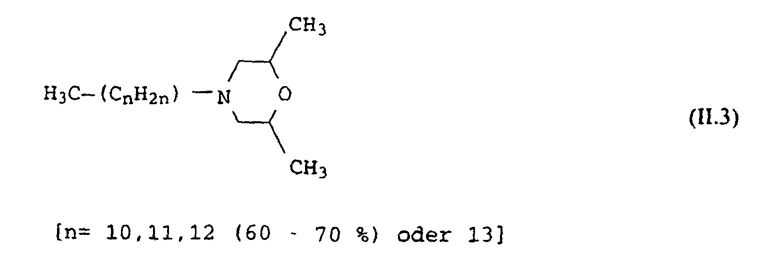 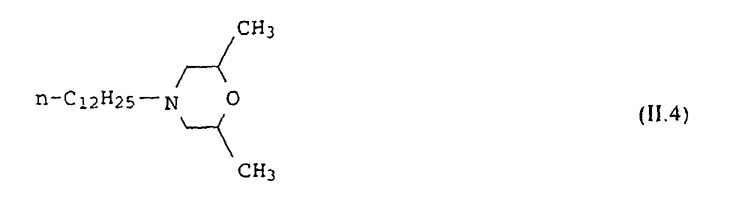 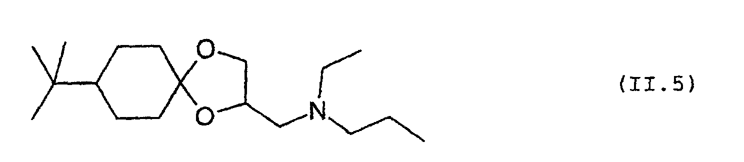 und, in Kombination mit b₁), mindestens eine der Komponenten b₂) oder b₃)
   b₂) fungizide Wirkstoffe ausgewählt aus den Azolen III.1. bis III.18
      - 1-[(2RS,4RS;2RS,4SR)-4-brom-2-(2,4-dichlorphenyl)tetrahydrofuryl]-1H-1,2,4-triazol (III.1) 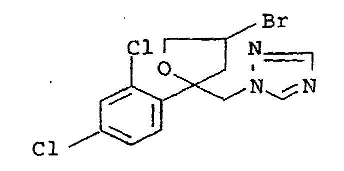
      - 2-(4-Chlorphenyl)-3-cyclopropyl-1-(1H-1,2,4-triazol-1-yl)-butan-2-ol (III.2) 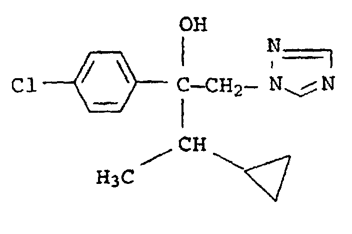
      - (±)-4-Chlor-4-[4-methyl-2-(1H-1,2,4-triazol-1-ylmethyl)- 1,3-dioxolan-2-yl]-phenyl-4-chlorphenylether (III.3) 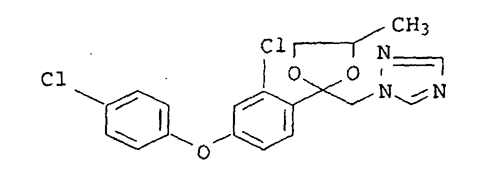
      - (E)-(R,S)-1-(2,4-dichlorphenyl)-4,4-dimethyl-2-(1H-1,2,4- triazol-1-yl)pent-1-en-3-ol (III.4) 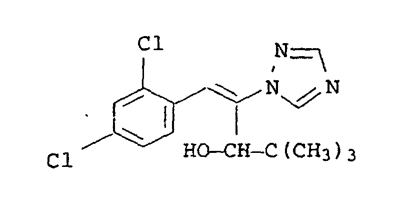
      - (Z)-2-(1H-1,2,4-Triazol-1-ylmethyl)-2-(4-fluorphenyl)-3- (2-chlorphenyl)-oxiran (III.5) 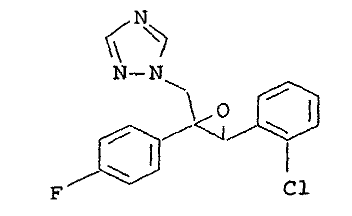
      - 4-(4-Chlorphenyl)-2-phenyl-2-(1H-1,2,4-triazolylmehtyl)-butyronitril (III.6) 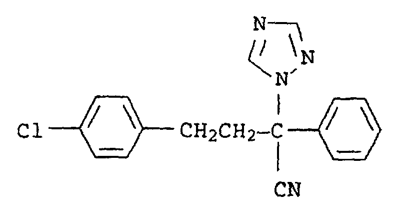
      - 3-(2,4-dichlorphenyl)-6-fluor-2-(1H-1,2,4-triazol-1-yl)chinazolin-4(3H)-on (III.7) 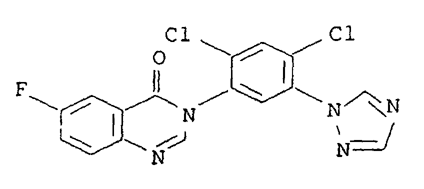
      - Bis(4-fluorphenyl)(methyl)(1H-1,2,4-triazol-1-ylmethyl)silan (III.8) 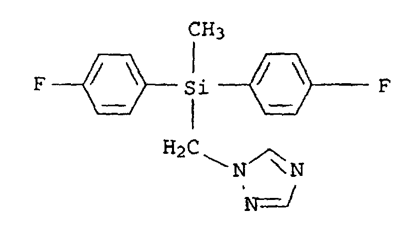
      - (R,S)-2-(2,4-Dichlorphenyl)-1-(1H-1,2,4-triazol-1-yl)- hexan-2-ol (III.9) 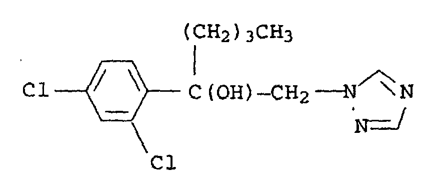
      - (1RS,5RS;1RS,5SR)-5-(4-chlorbenzyl)-2,2-dimenthyl-1-(1H- 1,2,4-triazol-1-ylmethyl)cyclopentanol (III.10) 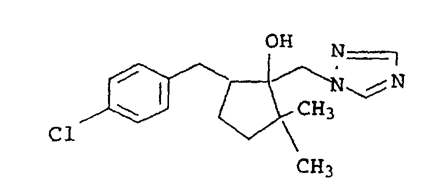
      - N-Propyl-N-[2-(2,4,6-trichlorphenoxy)ethyl]imidazol-1-carboxamid (III.11) 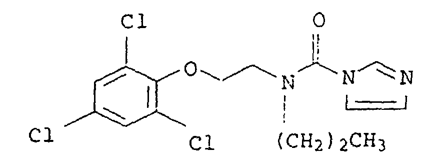
      - (±)-1-[2-(2,4-dichlorphenyl)-4-propyl-1,3-dioxolan-2-ylmethyl]-1H-1,2,4-triazol (III.12) 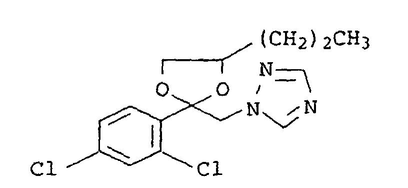
      - (R,S)-1-(4-chlorphenyl)-4,4-dimethyl-3-(1H-1,2,4-triazol-1-ylmethyl)-pentan-3-ol (III.13) 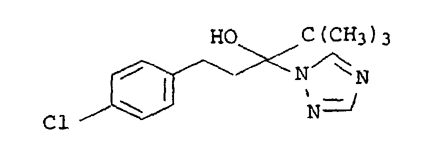
      - (±)-2-(2,4-Dichlorphenyl)-3-(1H-1,2,4-triazol-yl)-propyl- 1,1,2,2-tetrafluorethylether (III.14) und 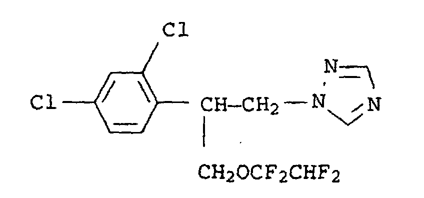
      - (E)-1-[1-[[4-Chlor-2-(trifluormethyl)-phenyl]imino]-2-propoxyethyl]-1H-imidazol (III.15) 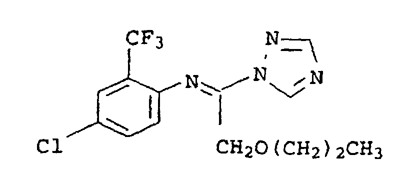
      - (RS)-2,4'-Difluor-α-(1H-1,2,4-triazol-1-ylmethyl)-benzhydryl-alkohol (III.16) 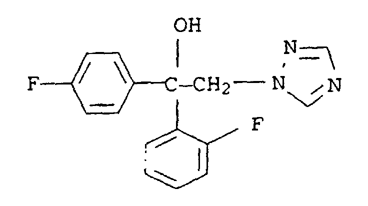
      - 2-p-Chlorphenyl-2-(1H-1,2,4-triazol-1-ylmethyl)-hexanenitril (III.17) 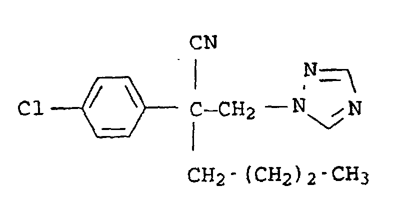
      - 1-(2,4-dichloro-β-propylphenethyl)-1H-1,2,4-triazole (III.18) 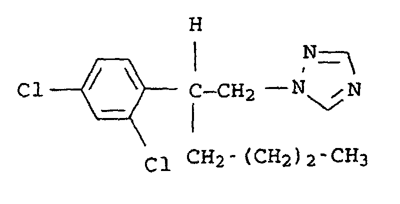 und/oder
   b₃) Benzoesäureester der allgemeinen Formel IV 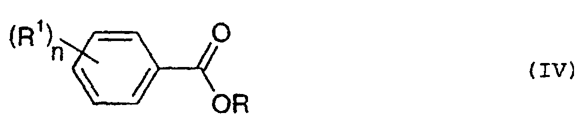 wobei die Substituenten die folgenden Bedeutungen haben:
      - n: einen wert von 0 bis 3
      - R: C₁-C₈-Alkyl, C₆-C₁₄-Aryl, C₆-C₁₄-Aryl-C₁-C₈-alkyl-
      - R¹: Wasserstoff, C₁-C₈-Alkyl, C₆-C₁₄-Aryl, C₆-C₁₄-Aryl-C₁-C₈-alkyl-, Halogen, C₁-C₆-Alkoxy.

Bevorzugte Ausführungsformen der Erfindung sind den Unteransprüchen zu entnehmen.

Die Verbindungen I.1 bis I.4 sind an sich bekannt:
- I.1 (common name: Benomyl): US-A 3,631,176, CAS RN [17804-35-2] ;
- I.2 (common name: Carbendazim): US-A 3,657,443, CAS RN [10605-21-7];
- I.3 (common name: Fuberidazol): CAS RN [3878-19-1]; und
- I.4 (common name: Thiabendazol): US-A 3,017,415, CAS RN [148-79-8].

Bevorzugt als Verbindung I wird der Wirkstoff, der unter dem Common name Carbendazim im Handel erhältlich ist.

Der Anteil der Verbindungen der Fortmel I liegt im Bereich von 1 bis 50, vorzugsweise von 5 bis 30 und insbesondere von 10 bis 20 Gew.%, bezogen auf das Gesamtgewicht der mehrphasigen Suspensionsemulsion.

Die Komponente b (Emulsion) macht im allgemeinen 5 bis 60, vorzugsweise 10 bis 50 und besonders bevorzugt 20 bis 40 Gew% der mehrphasigen Suspensionsemulsion aus.

Ebenfalls bekannt sind die Morpholin- bzw. Piperidinderivate II (II.1: common name: Fenpropimorph, US-A 4,202,894; II.2: common name: Fenpropidin, US-A 4,202,894; II.3: common name: Tridemorph, DE-A 11 64 152), deren Herstellung und deren Wirkung gegen Schadpilze. Die Verbindung II.4 ist unter dem Common name Aldimorph und dem Handelsnamen Falimorph™ kommerziell erhältlich. Bei der Verbindung II.5. handelt es sich um ein neues Fungizid (Common name: spiroxamine), welches kommerziell unter den Bezeichnungen Accrue™, Torch™ oder Impulse™ von Fa. Bayer erhältlich ist.

Der Anteil der Morpholinderivate an der Emulsion b) liegt im allgemeinen im Bereich von 20 bis 90, vorzugsweise im Bereich von 45 bis 75 Gew.%, bezogen auf das Gesamtgewicht der Komponente b.

Die Azolderivate III, deren Herstellung und deren Wirkung gegen Schadpilze ist an sich bekannt:
III.1: common name: Bromuconazol, Proc. Br. Crop Prot. Conf.-Pests Dis., 5-6, 439 (1990);
III.2: common name: Cyproconazol, US-A 4,664,696;
III.3: common name: Difenoconazol, GB-A 2,098,607;
III.4: common name: Diniconazol, CAS RN [83657-24-3];
III.5: common name (vorgeschlagen): Epoxiconazol, EP-A 196 038;
III.6: common name: Fenbuconazol (vorgeschlagen), EP-A 251 775;
III.7: common name: Fluquinconazol, Proc. Br. Crop Prot. Conf.-Pests Dis., 5-3, 411 (1992);
III.8: common name: Flusilazol, Proc. Br. Crop Prot. Conf.-Pests Dis., 1, 413 (1984);
III.9: common name: Hexaconazol, CAS RN [79983-71-4];
III.10: common name: Metconazol, Proc. Br. Crop Prot. Conf.-Pests Dis., 5-4, 419 (1992);
III.11: common name: Prochloraz, US-A 3,991,071;
III.12: common name: Propiconazol, GB-A 1,522,657;
III.13: common name: Tebuconazol, US-A 4,723,984;
III.14: common name: Tetraconazol, Proc. Br. Crop Prot. Conf.-Pests Dis., 1, 49 (1988);
III.15: common name: Triflumizol, JP-A 79/119,462
III.16: common name: Flutriafol, CAS RN [76674-21-0]
III.17: common name: Myclobutanil, CAS RN [88671-89-0]
III.18: Common name: Penconazol, CAS RN [66246-88-6]

Mit besonderem Vorteil werden als Triazolverbindung Propiconazol, Penconazol, Cyproconazol, Hexaconazol, Tebuconazol sowie deren Gemische verwendet.

Der Anteil der Azolwirkstoffe III an der Emulsion b) liegt im allgemeinen im Bereich von 0 bis 60, vorzugsweise von 10 bis 40 und besonders bevorzugt von 20 bis 35 Gew.%.

Bei den aromatischen Estern der Formel IV handelt es sich um an sich bekannte Derivate der Benzoesäure, deren Herstellung dem Fachmann an sich bekannt und in der Literatur beschrieben ist.

Bevorzugt werden die Benzylester der Benzoesäure.

Der Anteil der Verbindungen IV an der Emulsion b) liegt im allgemeinen im Bereich von 0 bis 55, vorzugsweise von 10 bis 50 und besonders bevorzugt von 25 bis 35 Gew.%.

Die erfindungsgemäßen mehrphasigen Suspensionsemulsionen können in der Emulsion b Mischungen aus den Wirkstoffen II mit den aromatischen Estern der Formel IV, Mischungen aus den Wirkstoffen II und den Wirkstoffen der Formel III (bevorzugt) oder Mischungen aus Verbindungen der Formel II, Verbindungen der Formel III und Verbindungen der Formel IV enthalten.

Von dem Begriff "Holz" sollen hier auch Holzfolgeprodukte wie Holzschnitte, Zellstoffe sowie weitere technische Produkte oder auch Cellulose enthaltende Materialien, die einem Pilzbefall zugänglich sind, z.B. Zwischenprodukte bei der Papierherstellung sowie verholzte Einjahrespflanzen (Bargasse, Raps), umfaßt werden.

Die Verbindungen II und die Azolverbindungen III liegen allgemein in Form der freien Base vor. Typische pH-werte einer 1 %igen wäßrigen Behandlungsbrühe liegen im Bereich von 6,5 bis 9, vorzugsweise im Bereich von 7 bis 8.

Die Komponenten der Emulsion b) sollten vorzugsweise eine Öl-Phasendichte im Bereich von 0,95 bis 1,05, vorzugsweise von 0,975 bis 1,025 g/cm³ aufweisen, da dies auf die anwendungstechnischen Eigenschaften eine vorteilhafte Wirkung hat. Die Öl-Phasendichte läßt sich einfach über das Mischungsverhältnis der Komponenten in der Emulsion b) steuern; entsprechnde Daten über die Dichten der einzelnen Komponenten sind dem Fachmann bekannt und in der Literatur beschrieben, so daß sich hier nähere Angaben erübrigen.

Bei der Verwendung einer besonders vorteilhaften Kombination eines Wirkstoffs der Formel II, insbesondere Fenpropimorph und eines Wirkstoffs der Formel III, insbesondere Propiconazol, Hexaconazol und oder Penconazol hat sich zur Einstellung einer geeigneten Dichte ein Mischungsverhältnis im Bereich von 1,5:1 bis 5:1, insbesondere von 2:1 bis 4:1 als geeignet und vorteilhaft herausgestellt. Besonders bevorzugt wird als Komponente b eine Emulsion aus Fenpropimorph und Propiconazol eingesetzt.

Der Vorteil der Einstellung der Öl-Phasendichte auf einen Wert möglichst nahe bei 1 g/cm³ liegt darin, daß bei der späteren Verdünnung auf die Anwendugskonzentration die Aufrahmung weitgehend zurückgedrängt wird. Darüber hinaus wird das Sedimentationsverhalten der kristallinen SC-Phase der Wirkstoffe I verbessert. Schließlich kann auch eine Koaleszenz der Ölphase weitestgehend verhindert werden.

Anstelle der Azolverbindungen III können erfindungsgemäß auch die aromatischen Ester der Formel IV zur Anpassung der Öl-Phasendichte der Wirkstoffe der Formel II enthaltenden Emulsion verbessert werden. Triazole sind daher zur Erzielung des gewünschten Effekts nicht zwingend notwendig. Der Anteil der Benzoesäureester liegt in der Regel bei 30 bis 200 g/l, vorzugsweise im Bereich von 50 bis 150 g/l, bezogen auf die Gesamtrezeptur der Formulierung.

Die Herstellung der erfindungsgemäßen mehrphasigen wäßrigen Suspensionsemulsionen kann in an sich bekannter Weise, z.B. nach den in der EP-A 707,445 beschriebenen Verfahren erfolgen, so daß sich hier nähere Angaben erübrigen.

Im Einzelfall kann die Azol-Komponente III auch als Suspensionskonzentrat-Anteil (SC-Anteil) in Mischung mit einer Verbindung der Formel I vorliegen, insbesondere dann, wenn der Schmelzpunkt des Azols oberhalb von 100 °C liegt und gleichzeitig dessen Löslichkeit in Wirkstoffen der Formel II oder Verbindungen der Formel IV weniger als 10g/l, insbesondere weniger als 2 g/l beträgt. Ein Beispiel für eine solche Azolkomponente, die vorteilhaft als Mischung mit z.B. Carbendazim formuliert werden kann, ist Epoxiconazol.

Neben den vorstehend beschriebenen Komponenten können die erfindungsgemäßen mehrphasigen wäßrigen Suspensionsemulsionen noch an sich bekannte Formulierungshilfsmittel enthalten.

Als oberflächenaktive Stoffe kommen dabei die Alkali-, Erdalkalioder Ammoniumsalze von aromatischen Sulfonsäuren, z.B. Lignin-, Phenol-, Naphthalin- und Dibutylnaphthalinsulfonsäure, sowie von Fettsäuren von Arylsulfonaten, von Alkylethern, von Laurylethern, von Fettalkoholsulfaten und von Fettalkoholglykolethersulfaten, Kondensationsprodukte von sulfoniertem Naphthalin und seiner Derivate mit Formaldehyd, Kondensationsprodukte des Naphtalins bzw. der Naphthalinsulfonsäuren mit Phenol und Formaldehyd, Kondensationsprodukte des Phenols oder der Phenolsulfonsäure mit Formaldehyd, Kondensationsprodukte des Phenols mit Formaldehyd und Natriumsulfit, Polyoxyethylenoctylphenolether, ethoxyliertes Isooctyl-, Octyl- oder Nonylphenol, Tributylphenylpolyglykolether, Alkylarylpolyetheralkohole, Isotridecylalkohol, ethoxyliertes Rizinusöl, ethoxylierte Triarylphenole, Salze phosphatierter Triarylphenolethoxylate, Laurylalkoholpolyglykoletheracetat, Sorbitester, Ligninsulfit-Ablaugen oder Methylcellulose oder deren Mischungen in Betracht.

Bei Mitverwendung oberflächenaktiver Stoffe liegt deren Anteil im allgemeinen im Bereich von 0,5 bis 25 Gew.%, bezogen auf das Gesamtgewicht der erfindungsgemäßen Suspensionsemulsion.

Als Emulgatoren können nicht-ionische, kationische und anionische Emulgatoren verwendet werden. Bevorzugt sind quartäre Ammoniumverbindungen sowie alkoxylierte, insbesondere ethoxylierte: Fettalkohole, Oxoalkohole und Öle (Ricinusöl, Fischöl).

Als ganz besonders vorteilhaft haben sich Fettamine als Emulgator erwiesen, welche mit 2 bis 25 Mol Ethylenoxid alkoxyliert sind, wie Ethomen® C 15, Ethomen® T23 oder Ethomen® S20 (Akzo Chemicals GmbH, 52355 Düren, Deutschland).

Zur Vergrößerung des Wirkungsspektrums oder zur Erzielung besonderer Effekte, z.B. zusätzlicher Schutz gegen Insekten einschließlich Termiten, können die vorstehend genannten lösungsmittelhaltigen Formulierungen oder Emulsionskonzentrate mit weiteren Wirkstoffen kombiniert werden, die im letzteren Fall mit geeigneten zusätzlichen Emulgatoren eingearbeitet werden.

Geeignete Mischungspartner sind z.B. die folgenden Verbindungen:
- Sulfenamide wie Dichlofluanid, Tolylfluanid, Folpet, Fluorfolpet;
- Benzimidazole wie Carbendazim, Benomyl, Fuberidazole, Thiabendazole oder deren Salze;
- Thiocyanate wie Thiocyanatomethylthiobenzothiazol, Methylenbisthiocyanat
- quartäre Ammoniumverbindungen wie Benzyldimethyletradecylammoniumchlorid, Benzyldimethyldodecylammoniumchlorid, Didecyldimethylammoniumchlorid;
- quartäre Phosphoniumverbindungen;
- Jodderivate wie Dijodmethyl-p-tolysulfon, 3-Jod-2-propinylalkohol, 4-Chlorphenyl-3-jodpropargylformal, 3-Brom-2, 3-dijod-2-propenylethylcarbonat, 2,3,3-Trijodallylalkohol, 3-Brom-2,3-di-jod-2-propenylalkohol, 3-Jod-2-propinyl-n-butylcarbamat, 3-Jod-2-propinyl-n-hexylcarbamat, 3-Jod-2-propinyl-cyclohexylcarbamat, 3-Jod-2-propinyl-phenylcarbamat, 0-1- (6-Jodo-3-oxo-hex-5-inyl)-butylcarbamat, 0-1-(6-Jodo-3-oxo-hex-5-inyl)phenylcarbamat, Napcocide;
- Phenolderivate wie Tribromphenol, Tetrachlorphenol, 3-Methyl-4-chlorphenol, Dichlorophen, o-Phenylphenol, m-Phenylphenol, p-Phenylphenol, 2-Benzyl-4-chlorphenol;
- Bromderivate wie 2-Brom-2-nitro-1,3-propandiol, 2-Brom-2-brommethyl-glutardinitril;
- Isothiazolinone wie N-Methylisothiazolin-3-on, 5-Chioro-N-methyl-isothiazolin-3-on, 4,5-Dichloro-N-octylisothiazolin-3-on, N-Octyl-isothiazolin-3-on;
- Benzisothiazolinone wie 4,5-Trimethylisothiazol-3-on;
- Pyridine wie 1-Hydroxy-2-pyridinthion (und ihre Na-, Fe-, Mn-, Zn-Salze), Tetrachlor-4-methylsulfonylpyridin;
- Metallseifen wie Zinn-, Kupfer-, Zinknaphthenat, -octat, -2-ethylhexanoat, -oleat, -phosphat, -benzoat.
- Organozinnverbindungen z.B. Tributyl (TBT)zinnverbindungen, Dialkyldithiocarbamate wie Na- und Zn-Salze von Dialkyldithiocarbamaten, Tetramethylthiuramdisulfid;
- Nitrile wie 2,4,5,6-Tetrachlorisophthalodinitril;
- Benzthiazole wie 2-Mercaptobenzothiazol;
- Chinoline wie 8-Hydroxychinolin und deren Cu-Salze oder Quinoxyfen;
- Tris-N-(cyclohexyldiazeniumdioxy)aluminium, N-(Cyclohexyldiazeniumdioxy)tributylzinn bzw. K-Salz, Bis-N-(cyclohexyldiazeniumdioxy)-Kupfer;

Als Insektizide werden bevorzugt zugesetzt:
- Phosphorsäureester wie Azinphos-ethyl, Azinphos-methyl, 1-(4-Chlorphenyl)-4-(o-ethyl, S-propyl)phosphoryloxypyrazol, Chlorpyrifos, Coumaphos, Demeton, Demeton-S-methyl, Diazinon, Dichlorvos, Dimethoate, Ethoprophos, Etrimfos, Fenitrothion, Fenthion, Heptenophos, Parathion, Parathion-methyl, Phosalone, Phoxim, Pirimiphos-ethyl, Pirimiphos-methyl, Profenofos, Prothiofos, Sulfprofos, Triazophos und Trichloron;
- Carbamate wie Aldocarb, Bendiocarb, 2-(1-Methylpropyl)phenylmethylcarbamat, Butocarboxim, Carbaryl, Carbofuran, Carbosulfan, Cloethocarb, Isoprocarb, Methomyl, Oxamyl, Primicarb, Promecarb, Propoxur und Thiocarb;
- Organosilicumverbindungen, vorzugsweise Dimethyl(phenyl)silylmethyl-3-phenoxybenzylether wie Dimethyl(4-ethoxyphenyl)silylmethyl-3-phenoxybenzylether oder (Dimethylphenyl)silylmethyl-2-phenoxy-6-pyridylmethylether wie Dimethyl-(9-ethoxy-phenyl)silylmethyl-2-phenoxy-6-pyridylmethylether oder (Phenyl-3- (3-phenoxyphenyl)propyl)dimethylsilane wie z.B. (4-Ethoxyphenyl)-(3- (4-fluoro-3-phenoxyphenyl-propyl)dimethylsilan;
- Pyrethroide wie Allethrin, Alphamethrin, Bioresmethrin, Byfenthrin, Cycloprothin, Cyfluthrin, Decamethrin, Cyhalothrin, Cypermethrin, Deltamethrin, a-Cyno-3-phenyl-2-methyl-benzyl-2,2-dimethyl-3-(2-chlor-2-trifluormethylvinyl)cyclopropancarboxylat, Fenpropathrin, Fenfluthrin, Fenvalerate, Flucythrinate, Flumethrin, Fluvalinate, Permethrin, Resemethrin und Tralomethrin;
- Nitroimine und Nitromethylene wie 1-((6-Chlor-3-pyridinyl)methyl)-4,5-dihydro-N-nitro-1H-imidazol-2-amin (midacloprid), N-((6-Chlor-3-pyridyl)methyl)-N'-cyano-N'-methylacetamid;
- Häutungshemmer wie Flurox und Farox.

Auch ein Zusatz von wasserunlöslichen Säuren zu den erfindungsgemäßen Suspensionsemulsionen kann die Wirksamkeit der Wirksubstanzen verbessern. Geeignete wasserunlösliche organische Säuren sind z.B. aliphatische oder aromatische Mono- oder Polycarbonsäuren, z.B. eine aliphatische unverzweigte Monocarbonsäure mit 5 bis 20 C-Atomen wie Hexansäure, Heptansäure, Octansäure, Nonansäure und Decansäure, oder eine aliphatische verzweigte Monocarbonsäure mit 5 bis 20 C-Atomen wie 2-Ethylpentansäure, 2-Ethylhexansäure, 2-Ethylheptansäure, Isooctansäure, Isononansäure und Versaticsäure, oder Neocarbonsäure (stärker verzweigte Monocarbonsäuren), oder eine aliphatische Dicarbonsäure mit 5 bis 20 C-Atomen wie Sebacinsäure und Decandicarbonsäure, oder eine aromatische oder aromatisch/aliphatische Carbonsäure wie Naphthensäure und Benzoesäure.

Derartige Säuren werden bevorzugt als Anionen von Metallsalzen,insbesondere von Alkali- oder Erdalkalimetallen, ggf. als Cu-Salze, Ammonium- oder organische Ammoniumsalze abgeleitet von primären, sekundären oder tertiären Aminen bzw. quaternären Ammoniumsalzen eingesetzt.

Den erfindungsgemäßen wäßrigen mehrphasigen Suspensionsemulsionen oder deren wäßrigen Verdünnungen können zusätzlich Bindemittel, z.B. öllösliche oder wasserverdünnbare Alkydharze, Acrylatdispersion, oder im Falle von Grundierungen, welche ca. 2 bis 10 Gew.-% Festharz enthalten oder Lasuren, welche ca. 10 bis 25% Festharz enthalten, auch anorganische oder organische Pigmentzubereitungen, wasser- und öllösliche Farbstoffe, "waterrepellants" wie Metallstearate oder Wachse und/oder sonstige Hilfsmittel wie Trockner, Netzmittel und Penetrationshilfsmittel zugesetzt werden.

Die Anwendung zum Schutz des Holzes kann z.B. je nach Gefährdung des Holzes erfolgen:
a) durch Besprühen des Holzes mit der verdünnten Suspensionsemulsion,
b) durch Tauchen des Holzes in die Suspensionsemulsion (Kurztauchen bis Trogtränken),
c) durch Streichen des Holzes oder Fluten.

Die Konzentration der fungiziden Mischung im jeweiligen Holzschutzmittel richtet sich meist nach dem Grad der Gefährdung des zu behandelnden Holzes durch die Pilze und daneben nach dem gewählten Anwendeverfahren. Bei Holzfolgeprodukten und Cellulose werden beispielsweise zumeist unverdünnte Konzentrate eingesetzt (z.B. bei Sperrholz, Spanplatten, Bagasseplatten).

Auch der Erfolg der Behandlung mit den fungiziden Mischungen oder den gebrauchsfertigen Holzschutzmitteln, insbesondere mit den erfindungsgemäßen Suspensionsemulsionen, hängt in der Regel vom Anwendeverfahren ab.

Bei der Anwendung verdünnter Systeme enthalten diese in der Regel 0,1 bis 3, vorzugsweise 0,3 bis 1,5 % der erfindungsgemäßen Suspensionsemulsion, wobei der Rest Wasser oder ein Gemisch Wasser/organsiches Lösemittel ist; Wasser wird bevorzugt.

Die erfindungsgemäß verwendeten Mischungen und Holzschutzmittel schützen besonders wirksam gegen holzverfärbende Pilze, insbesondere Bläuepilze und vor allem Aureobasidium pullulans und Sclerophoma pityophila, welche zu den Ascomyceten gezählt werden.

Daneben wurde gefunden, daß die Mischungen und Holzschutzmittel Holz auch gut schützen gegen
a) Basidiomyceten (z.B. Serpula lacrymans, Coniophora puteana) und
b) weitere Ascomyceten wie Schimmelpilze (z.B. Aspergillus niger) und Moderfäulepilze (z.B. Chaetomium globosum).

### Beispiele

Die erfindungsgemäßen Suspoemulsionen mit den Rezepturen gemäß Tabellen 1a, 1b und 2 und Anwendungsmittel können in analoger Weise wie in der EP 707 445 beschrieben hergestellt werden. In dieser Schrift finden sich auch Hinweise bezüglich Eigenschaften von EC- und SC-Formulierungen. Die unter EP 707 445 beschriebenen Mehrphasensysteme sind in der Regel ebenfalls, wie die Formulierungen der vorliegenden Erfindung Suspensionsemulsionen, die aus einer Wasserphase, einer Ölphase (auch genannt EC-Phase) und einer SC-Phase bestehen.

Die erfindungsgemäßen Suspensionsemulsionen gemäß den nachstehenden Tabellen 1a, 1b und 2 wurden hergestellt, indem zu einem Suspensionskonzentrat des Wirkstoffs Carbendazim (I.2) unter starkem Rühren bzw. unter starkem Dispergieren oder Scheren eine Ölphase der in der Tabelle angegebenen Zusammensetzung eingebracht und damit suspoemulgiert wurde.
1. Herstellung der Carbendazim (BCM)-Suspension (BCM-Stamm-SC) Zu 500 ml destilliertem bzw. vollentsalztem Wasser und 20 g Pluronic PE 10500 sowie 20 g Wettol D1 werden 500 g BCM (ber. 100% Wirkstoff) eingerührt und auf 1 l ausgelitert. Gemäß EP 707 445 Beispiel 1 wurde dann in einer Kugelmühle unter Kühlung die Mischung auf 10°C solange vermahlen, bis sich eine Teilchengröße von 80% < 2 mikron eingestellt hatte. Diese BCM-Stammsuspension wurde dann anteilig gemäß u. g. Rezepturen für alle Suspoemulsionen eingesetzt.
2. Allgemeine Versuchsbeschreibung zur Herstellvorschrift von Suspoemulsionen aus BCM-Suspensionen
   2.1 In der vorgelegten Restmenge Wasser (abhängig von Reinheitsgrad der Wirkstoffe ) wurde Kelzan S so lange gerührt, bis es vollständig aufgequollen war und sich eine leicht viskose homogene Mischung eingestellt hatte (ca. 2 Stunden Rührzeit).
   2.2 Anschließend werden als weitere Inhaltsstoffe anteilig die BCM-Stamm-Suspension, Wettol D1; 1,2-Propylenglykol; Formaldehyd, Pluronic PE 10500 bzw. andere Hilfsmittel gemäß Rezeptur zugegeben und solange gerührt bis das pulvrige Wettol D1 vollständig gelöst war und sich eine homogene Suspension eingestellt hatte.
   2.3 Unter weiterem Rühren erfolgte dann die kontinuierliche Zugabe einer homogenen Mischung aus Morpholin und Triazol, hier aus Fenpropimorph und Propiconazol bzw. Benzoesäure-Ester in entsprechendem Verhältnis gemäß den Rezepturen nach Tabellen 1a, 1b und 2, wobei weitere ca. 100 min. mit Dissolverrührer gerührt wurde.
   2.4.Anschließend wurden per Probennahme die Anteile der Wirkstoffe analysiert und eine Prüfung der Partikelgröße durchgeführt.
   2.5.Zuletzt erfolgt die Zugabe an Silicon SRE bei langsamer Umdrehungszahl des Rührers ad. 1 l Suspoemulsion.

Nach Durchführung der Schritte 2.1. bis 2.5. ergibt sich in der Regel eine Teilchengröße der erfindungsgemäßen Suspensionsemulsionen von 40 % kleiner als 2 Mikron und 100 % kleiner als 8 Mikron; ggf. kann zur Erzielung dieser Werte, die sich als vorteilhaft herausgestellt haben, auch noch nachdispergiert werden.

Die nachstehende Tabelle erläutert die in den Beispielen eingesetzten Komponenten :

**Tabelle 1 :**

| **Name** | **chem. Bezeichnung** | **Bezugsquelle** |
|---|---|---|
| Antischaummittel SRE | Silikonölemulsion | Wacker-Chemie |
| Pluronic® PE 10500 | EO/PO-Blockcopolymer | BASF AG |
| Wettol^{R} D 1 | Kondensationsprodukt ans Phenolsulfonsäure, Harnstoff und Formaldehyd | BASF AG |

Die Fertig-Formulierungen gemäß Tabelle 1a wurden 0,7 und 2,8 %ig mit Leitungswasser ad. 150 ml verdünnt und 5 Minuten mit einem Magnetrührer homogenisiert. Anschließend wurden kalibrierte 100 ml Spitzzylinder mit den verdünnten Suspoemulsionen vollständig und luftfrei gefüllt, mit einem Stopfen verschlossen und mit der kalibrierten Spitze nach oben bzw. kopfüber mit dem Stopfen nach unten aufgestellt.

Nach jeweils 24 Stunden wird die Rahmung in mm abgelesen, anschließend 30x geschüttelt bzw. weitgehend rehomogenisiert und erneut stehengelassen.

Die Zusammensetzungen und die Ergebnisse sind der nachstehenden Tabelle 1a zu entnehmen.

**Tabelle 1a:**

| **Bestandteile ausgewählter Formulierungen:** | **Formulierung Versuch Nr.1a-1 (erfindungsgemäß)** g/l | **Formulierung Versuch** Nr.1a-2 (Vergleich) g/l |
|---|---|---|
| Carbendazim (BCM) | 90 | 90 |
| Fenpropimorph (FPM) | 270 | 270 |
| | | |
| Wettol™ D1 | 45 | 45 |
| Pluronic™ 10 500 | 17,4 | 17,4 |
| 1,2-Propylenglykol (Frostschutzmittel) | 34,7 | 34,7 |
| Benzoesäure-benzylester (Fa. Aldrich) | 139,5 | |
| Siliconöl AP 500 (Wacker-Chemie) | | 139,0 |
| Ölphasendichte*: | ca. 1,0 g/ml | ca. 1,0 g/ml |

| **Rahmung (0,7 % d. o. g. Formulierungen)** | **in ml** | **in ml** |
|---|---|---|
| sofort bzw. innerhalb 0,5 Std. | keine | <0,1 |
| 24 Std. | <0,05 | 0,25 |
| 72 Std. | 0,10 | 0,45 |

| **Rahmung (2,8 % d. o. g. Formulierungen)** | **in ml** | **in ml** |
|---|---|---|
| 24 Std. | <0,05 | 1,00 |

Bei der Bestimmung der physikalischen Lagerstabilität nach 6 Monaten durch Bestimmung des Anteils an Teilchen mit einer Teilchengröße von weniger als 2 Mikron ergab sich für 1a-1 ein Wert von 46,5 bzw. 51,1% (bei 40 bzw. 50°C); die entsprechenden Werte für 1a-2 waren 36,5 bzw. 35,1%.

Beide Fertig-Formulierungen bzw. Suspoemulsionen gemäß Tab. 1a enthalten als weitere inerte Bestandteile noch jeweils 1,8 g/l des Biocids Kathon™ MK, Handelsprodukt der Fa. Rohm und Haas (Philadelphia) sowie 2,5 g/l des Antischaummittels Silicon SRE, Handelsprodukt der Fa. Wacker-Chemie.

Als Ölphasendichte wurde die Mischung der Komponenten FPM/ Benzoesäure-Benzylester bzw. FPM/Siliconöl AP 500 bestimt.

### Versuchsserie Ib:

In analoger Weise wurden gemäß Rezepturen nach Tabelle 1a weitere Vergleichsversuche mit FPM und Hilfsmitteln hoher Dichte zur Optimierung der Morpholin-Ölphasendichte durchgeführt. Die resultierenden Suspoemulsionen erwiesen sich aber gemäß Tabelle 1b im Gegensatz zu den Suspoemulsionen mit Benzoesäure-Estern bzw. Siliconölen physikalisch als völlig instabil und ungeeignet, so dass keine Dauerversuche zur Lagerstabilität bzw. kein Versuch unter Anwendungskonzentration durchgeführt werden konnte.

**Tabelle 1b:**

| **Ölphasen-Dichten: 0,99-1,01 g/ml gemäß Anteile:** | | | |
|---|---|---|---|
| **Versuch Nr.** | **FPM Anteile g/l** | **Anteile g/l Hilfsmittel** | **Bewertung der Suspoemulsionen** |
| 1b-1 | 270 | 125,5 2-Phenylphenol | Keine Dispergierfähigkeit |
| 1b-2 | 270 | 118,5 Phthalsäuredimethylester | Flockung und Agglomerate der Fertigformulierung |
| 1a-1 | 270 | 139,0 Benzoesäurebenzylester | erfindungsgemäß s. Versuch 1a-1; |
| *) Die Einstellung der gewünschten Dichten um 1.0 g/ml erfolgte durch iteratives Mischen von FPM mit den Komponeten 2-Phenylphenol bzw. Phthalsäure-dimethylester. | | | |

### Versuchsserie II:

Die Versuchsdurchführung erfolgte gemäß Versuchsserie I.
Die nachstehende Tabelle 2 enthält Angaben zu Hilfsmittel und Wirkstoffen in g/l unter 0,5%iger Anwendungskonzentration der Suspoemulsionen sowie Ergebnisse zu Rahmungsversuchen gemäß Tabelle 1. Ferner werden die Lagerstabilitäten der eingesetzten Suspoemulsionen in Form der Teilchengrößen beschrieben.

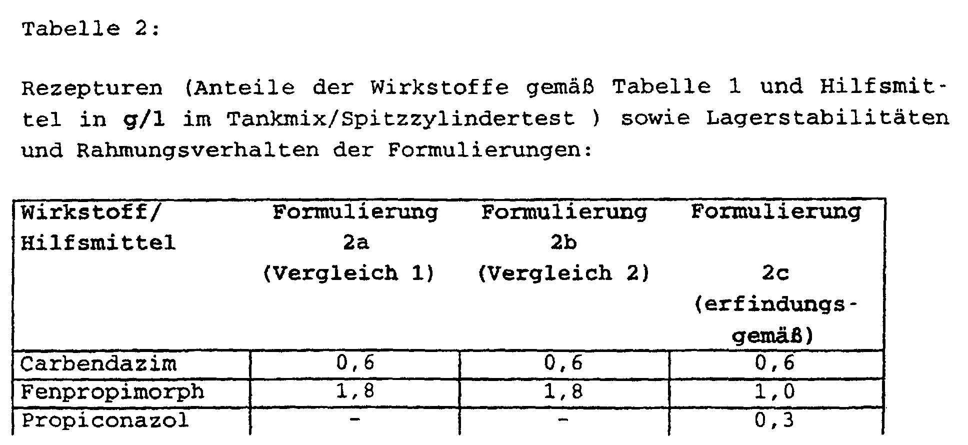

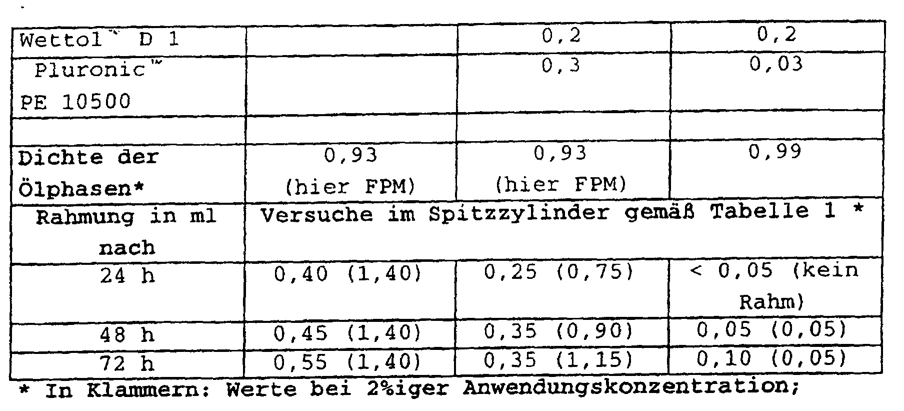

Bei der Bestimmung der Lagerstabilität der Formulierungen nach 6 Monaten durch Bestimmung der Anteile der Teilchen mit einer Teilchengröße von weniger als 2 Mikron ergab sich für Formulierung 2 b bei 40 °C ein Wert von 47,6 %, bei 50°C ein wert von 49,5 %. Für die erfindungsgemäße Suspensionsemulsion 2c waren die entsprechenden Werte 57 bzw. 60,1 %.

Als weitere inerte Hilfsmittelanteile enthalten alle Formulierungen nach Tabelle 2 0,2 g/l 1,2-Propylenglykol, 0,01 g/l Antischaummittel Silicon SRE (Produkt der Fa. Wacker-Chemie GmbH) sowie 0,01 g/l des Biocids Kathon™ MK.

Im Vergleich zu den Formulierungen 2a und 2b gemäß Stand der Technik, erhält man mit der erfindungsgemäßen Formulierung 2c eine deutliche Verbesserung bezüglich des Rahmungsverhaltens unter Anwendungskonzentrationen.

Auch bei up scale-Vesuchen im 100 1-Maßstab blieben zu 2c analoge Formulierungen homogen, sehr gut re-emulgierfähig und somit anwendungssicher.

Die erfindungsgemäßen Suspensionsemulsionen werden allgemein 0,1-3%ig, bevorzugt aber 0,3-1,5% ig in Wasser als Holzbehandlungsmittel eingesetzt.

Dabei variiert die optimale Aufwandmenge der Suspoemulsionen je nach mikrobiologischen Gefahrenpotential des Holzes. So erfordern regionale Quantitäten und Qualitäten an vorliegenden Mikroorganismen und Pathogen in Abhängigkeit von der Behandlungsmethodik und Durchschnittstemperatur der Holz-Lagerbedingungen eine angepaßte Aufwandmenge.

## Patentansprüche

1. Mehrphasige wäßrige Suspensionsemulsionen, enthaltend als wesentliche Komponenten
a) 1 bis 50 Gew.% eines fungiziden Wirkstoffs aus der Klasse der Benzimidazole oder der sie freisetzenden Vorstufen der Formeln I.1. bis I.4 als mikrosuspendierte Feststoffteilchen,
Methyl 1-(butylcarbamoyl)-benzimidazol-2-yl-carbamat (I.1) 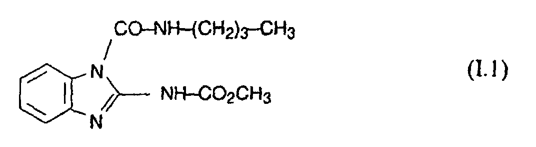
Methyl benzimidazol-2-yl-carbamat (I.2) 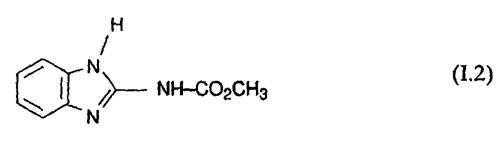
2-(2'-Furyl)-benzimidazol (I.3) 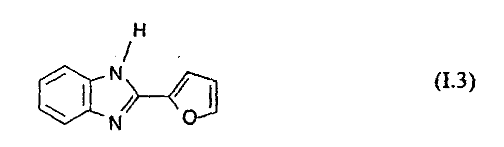
2-(1,3-Thiazol-4-yl)-benzimidazol (I.4) 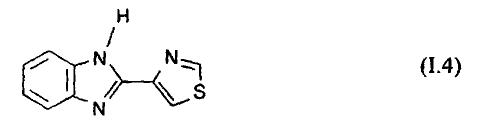
b) einer Emulsion enthaltend
b₁) einen fungiziden wirkstoff ausgewählt aus Verbindungen der Formeln II.1. bis II.5 und 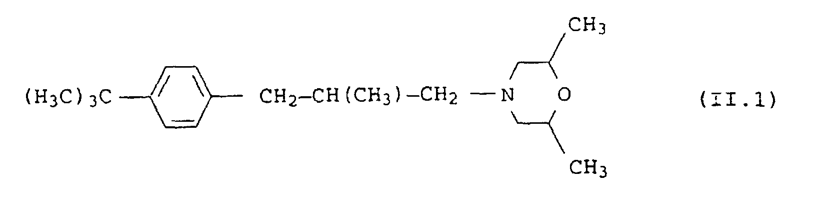 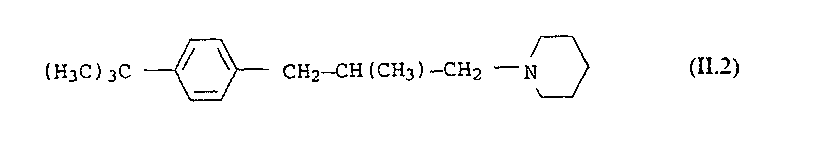 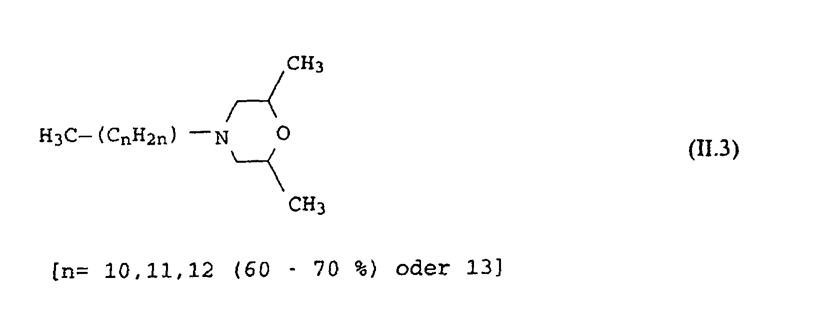 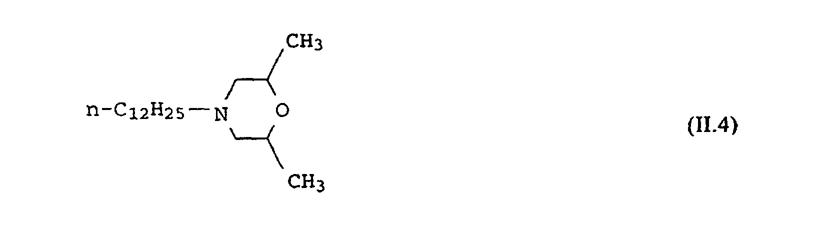 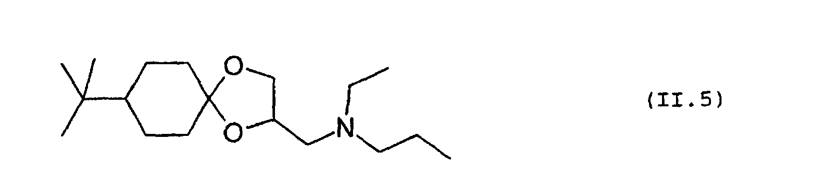 und, in Kombination mit b₁), mindestens eine der Komponenten b₂) oder b₃)
b₂) fungizide Wirkstoffe ausgewählt aus den Azolen III.1. bis III. 18.
- 1-[(2RS,4RS;2RS,4SR)-4-brom-2-(2,4-dichlorphenyl)tetrahydrofuryl]-1H-1,2,4-triazol (III.1)
- 2-(4-Chlorphenyl)-3-cyclopropyl-1-(1H-1,2,4-triazol-1-yl)-butan-2-ol (III.2)
- (±)-4-Chlor-4-[4-methyl-2-(1H-1,2,4-triazol-1-ylmethyl)- 1,3-dioxolan-2-yl)-phenyl-4-chlorphenylether (III.3)
- (E)-(R,S)-1-(2,4-dichlorphenyl)-4,4-dimethyl-2-(1H-1,2,4- triazol-1-yl)pent-1-en-3-ol (III.4)
- (Z)-2-(1H-1,2,4-Triazol-1-ylmethyl)-2-(4-fluorphenyl)-3-(2-chlorphenyl)-oxiran (III.5)
- 4-(4-Chlorphenyl)-2-phenyl-2-(1H-1,2,4-triazolylmehtyl)-butyronitril (III.6)
- 3-(2,4-dichlorphenyl)-6-fluor-2-(1H-1,2,4-triazol-1-yl)chinazolin-4(3H)-on (III.7)
- Bis(4-fluorphenyl)(methyl)(1H-1,2,4-triazol-1-ylmethyl)silan (III.8)
- (R,S)-2-(2,4-Dichlorphenyl)-1-(1H-1,2,4-triazol-1-yl)- hexan-2-ol (III.9)
- (1RS,5RS;1RS,5SR)-5-(4-chlorbenzyl)-2,2-dimenthyl-1-(1H-1,2,4-triazol-1-ylmethyl)cyclopentanol (III.10)
- N-Propyl-N-[2-(2,4,6-trichlorphenoxy)ethyl]imidazol-1-carboxamid (III.11)
- (±)-1-[2-(2,4-dichlorphenyl)-4-propyl-1,3-dioxolan-2-ylmethyl]-1H-1,2,4-triazol (III.12)
- (R,S)-1-(4-chlorphenyl)-4,4-dimethyl-3-(1H-1,2,4-triazol-1-ylmethyl)-pentan-3-ol (III.13)
- (±)-2-(2,4-Dichlorphenyl)-3-(1H-1,2,4-triazol-yl)-propyl-1,1,2,2-tetrafluorethylether (III.14) und
- (E)-1-[1-[[4-Chlor-2-(trifluormethyl)-phenyl]imino]-2-propoxyethyl]-1H-imidazol (III.15)
- (RS)-2,4'-Difluor-α-(1H-1,2,4-triazol-1-ylmethyl)-benzhydryl-alkohol (III.16)
- 2-p-Chlorphenyl-2-(1H-1,2.4-triazol-1-ylmethyl)-hexanenitril (III.17)
- 1-(2,4-dichloro-β-propylphenethyl)-1H-1,2,4-triazole (III.18)
und/oder
b₃) Benzoesäureester der allgemeinen Formel IV 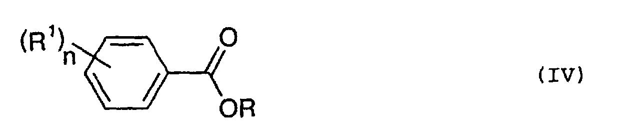 wobei die Substituenten die folgenden Bedeutungen haben:
n einen Wert von 0 bis 3
R C₁-C₈-Alkyl, C₆-C₁₄-Aryl, C₆-C₁₄-Aryl-C₁-C₈-alkyl-
R¹ Wasserstoff, C₁-C₈-Alkyl, C₆-C₁₄-Aryl, C₆-C₁₄-Aryl-C₁-C₈-alkyl-, Halogen, C₁-C₆-Alkoxy.

2. Mehrphasige wäßrige Suspensionsemulsionen nach Anspruch 1, enthaltend 5 bis 15 Gew.% eines Wirkstoffs der Formeln III.9, III.12 und/oder III.18.

3. Mehrphasige wäßrige Suspensionsemulsionen nach Anspruch 1 oder 2, **dadurch gekennzeichnet, daß** die Öl-Phasendichte der in der Emulsion b) enthaltenen Komponenten im Bereich von 0,95 bis 1,05 g/cm³ liegt.

4. Mehrphasige wäßrige Suspensionsemulsionen nach einem der Ansprüche 1 bis 3, enthaltend in der Komponente b eine Mischung aus einem Wirkstoff der Formel II und einem Azolwirkstoff ausgewählt aus III.9, III.12 und III.18 im Gewichtsverhältnis 1,5:1 bis 5<.1.

5. Verwendung der mit Wasser verdünnten mehrphasigen wäßrigen Suspensionsemulsionen nach einem der Ansprüche 1 bis 4 zur Behandlung von Holz gegen holzschädigende Pilze durch Sprühen, Fluten, Tauchen odere andere an sich bekannte Verfahren.

6. Verwendung der mit Wasser verdünnten mehrphasigen wäßrigen Suspensionsemulsionen nach einem der Ansprüche 1 bis 4 als Fungizide im Pflanzenschutz.

## Claims

1. A multi-phase aqueous suspoemulsion comprising, as essential components,
a) 1 to 50% by weight of a fungicidal active ingredient from the class of the benzimidazoles or the precursors liberating them of the formulae I.1. to I.4 as microsuspended solids particles,
methyl 1-(butylcarbamoyl)benzimidazol-2-ylcarbamate (I.1) 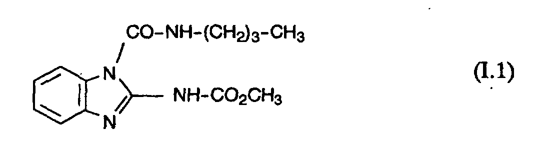
methyl benzimidazol-2-ylcarbamate (I.2) 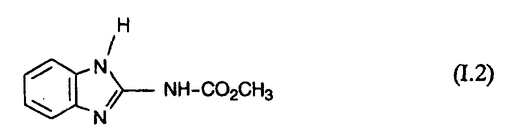
2-(2'-furyl)benzimidazole (I.3) 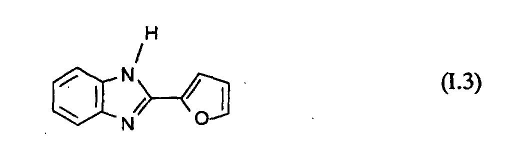
2-(1,3-thiazol-4-yl)benzimidazole (I.4) 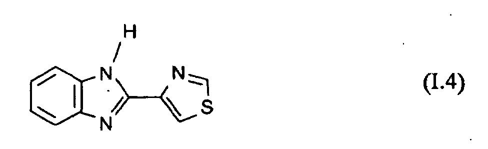
b) an emulsion comprising
b₁) a fungicidal active ingredient selected from among compounds of the formulae II.1. to II.5 and 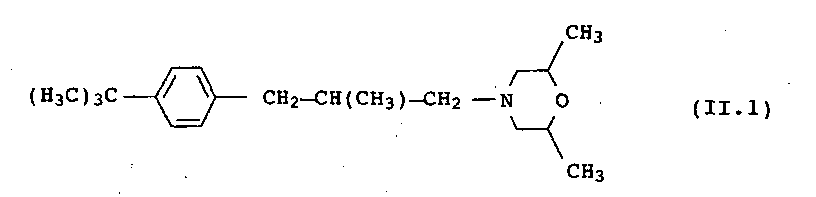 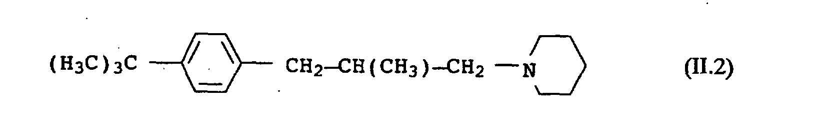 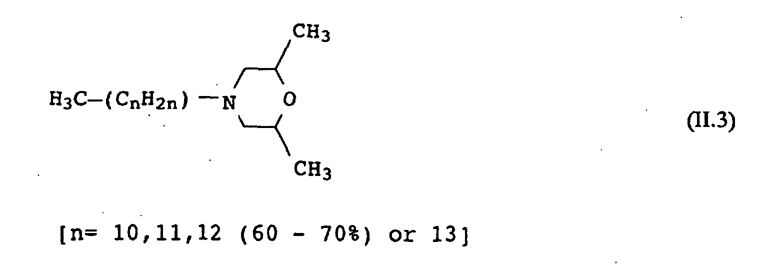 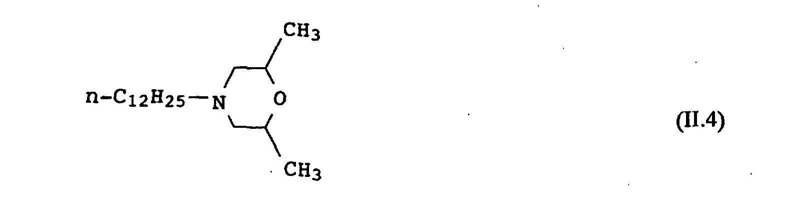 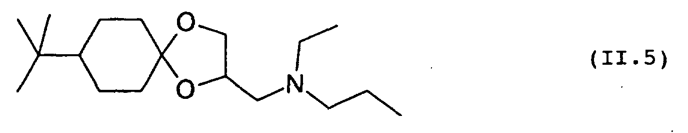 and, in combination with b₁), at least one component b₂) or b₃)
b₂) fungicidal active ingredients selected from among the azoles III.1. to III.18
- 1-[(2RS,4RS;2RS,4SR)-4-bromo-2-(2,4-dichlorophenyl)-tetrahydrofuryl]-1H-1,2,4-triazole (III.1)
- 2-(4-chlorophenyl)-3-cyclopropyl-1-(1H-1,2,4-triazol-1-yl)butan-2-ol (III.2)
- (±)-4-chloro-4-[4-methyl-2-(1H-1,2,4-triazol-1-ylmethyl)-1,3-dioxolan-2-yl]phenyl 4-chlorophenyl ether (III.3)
- (E)-(R,S)-1-(2,4-dichlorophenyl)-4,4-dimethyl-2-(1H-1,2,4-triazol-1-yl)pent-1-en-3-ol (III.4)
- (Z)-2-(1H-1,2,4-triazol-1-ylmethyl)-2-(4-fluorophenyl)-3-(2-chlorophenyl)oxirane (III.5)
- 4-(4-chlorophenyl)-2-phenyl-2-(1H-1,2,4-triazolylmethyl)butyronitrile (III.6)
- 3-(2,4-dichlorophenyl)-6-fluoro-2-(1H-1,2,4-triazol-1-yl)quinazolin-4(3H)-one (III.7)
- bis(4-fluorophenyl)(methyl)(1H-1,2,4-triazol-1-ylmethyl)silane (III.8)
- (R,S)-2-(2,4-dichlorophenyl)-1-(1H-1,2,4-triazol-1-yl)hexan-2-ol (III.9)
- (1RS,5RS;1RS,5SR)-5-(4-chlorobenzyl)-2,2-dimethyl-1-(1H-1,2,4-triazol-1-ylmethyl)cyclopentanol (III.10)
- N-propyl-N-[2-(2,4,6-trichlorophenoxy)ethyl]-imidazole-1-carboxamide (III.11)
- (±)-1-[2-(2,4-dichlorophenyl)-4-propyl-1,3-dioxolan-2-ylmethyl]-1H-1,2,4-triazole (III.12)
- (R,S)-1-(4-chlorophenyl)-4,4-dimethyl-3-(1H-1,2,4-triazol-1-ylmethyl)pentan-3-ol (III.13)
- (±)-2-(2,4-dichlorophenyl)-3-(1H-1,2,4-triazol-yl)-propyl 1,1,2,2-tetrafluoroethyl ether (III.14)
- (E)-1-[1-[[4-chloro-2-(trifluoromethyl)phenyl]-imino]-2-propoxyethyl]-1H-imidazole (III.15)
- (RS)-2,4'-difluoro-α-(1H-1,2,4-triazol-1-ylmethyl)-benzhydryl alcohol (III.16)
- 2-p-chlorophenyl-2-(1H-1,2,4-triazol-1-ylmethyl)-hexanonitrile (III.17)
- 1-(2,4-dichloro-β-propylphenethyl)-1H-1,2,4-triazole (III.18)
and/or
b₃) benzoic esters of the formula IV 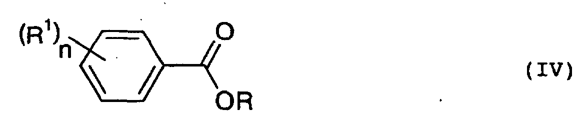 where the substituents have the following meanings:
n has a value of 0 to 3
R is C₁-C₈-alkyl, C₆-C₁₄-aryl, C₆-C₁₄-aryl-C₁-C₈-alkyl-
R¹ is hydrogen, C₁-C₈-alkyl, C₆-C₁₄-aryl, C₆-C₁₄-aryl-C₁-C₈-alkyl-, halogen, C₁-C₆-alkoxy.

2. A multi-phase aqueous suspoemulsion as claimed in claim 1, comprising 5 to 15% by weight of an active ingredient of the formulae III.9, III.12 and/or III.18.

3. A multi-phase aqueous suspoemulsion as claimed in claim 1 or 2, wherein the oil phase density of the components in emulsion b) ranges from 0.95 to 1.05 g/cm³.

4. A multi-phase aqueous suspoemulsion as claimed in any of claims 1 to 3, comprising, in component b, a mixture of an active ingredient of the formula II and an azole active ingredient selected from among III.9, III.12 and III.18 in the weight ratio 1.5:1 to 5<.1.

5. The use of the multi-phase aqueous suspoemulsion as claimed in any of claims 1 to 4 which have been diluted with water for the treatment of timber against fungal timber pests by spraying, flooding, immersing or other processes known per se.

6. The use of the multi-phase aqueous suspoemulsion as claimed in any of claims 1 to 4 which have been diluted with water as fungicides in plant protection.

## Revendications

1. Emulsions de suspensions aqueuses à plusieurs phases, contenant comme composants essentiels
a) 1 à 50% en poids d'une substance à activité fongicide de la classe des benzimidazoles ou des progéniteurs de formules I:1 à I.4 les libérant, sous forme de particules solides en microsuspension,
1-(butylcarbamoyl)-benzimidazole-2-yl-carbamate de méthyle (I.1) 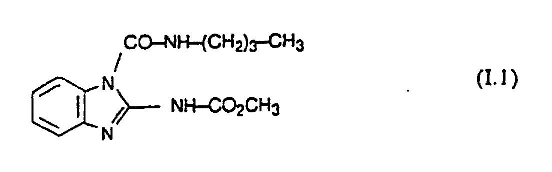
benzimidazole-2-yl-carbamate de méthyle (I.2) 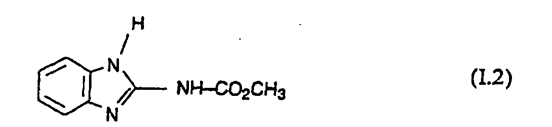
2-(2'-furyl)-benzimidazole (I.3) 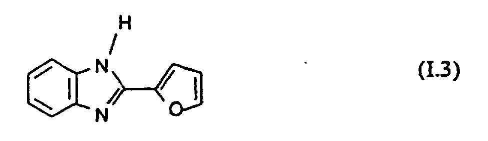
2-(1,3-thiazole-4-yl)-benzimidazole (I.4) 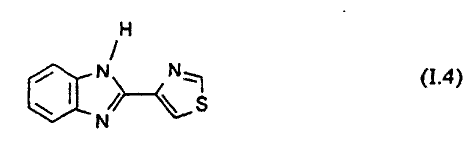
b) une émulsion contenant
b₁) une substance à activité fongicide choisie parmi les composés de formules II.1 à II.5 et 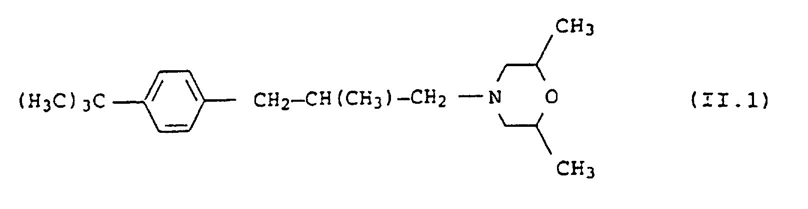 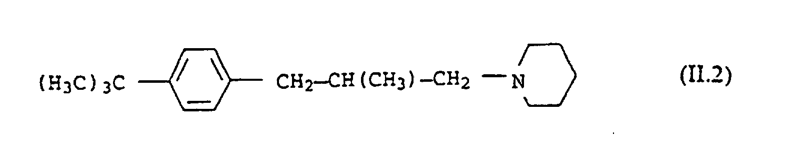 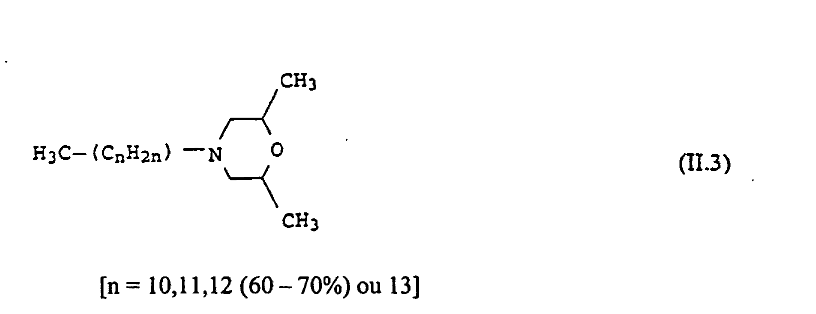 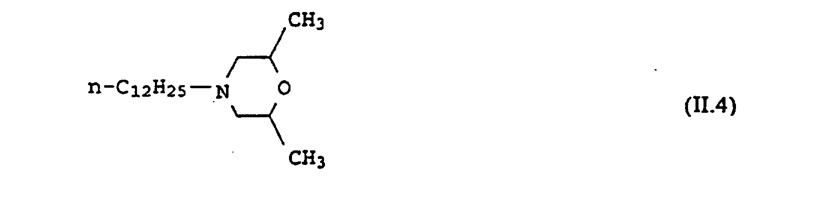 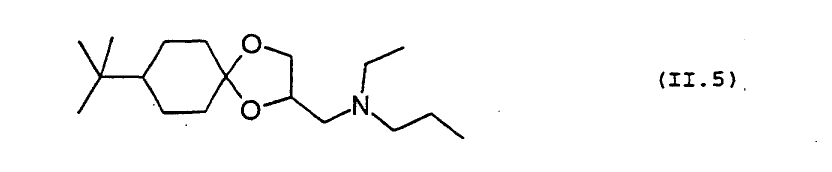 et, en combinaison avec b₁), au moins l'un des composants b₂) ou b₃)
b₂) substances à activité fongicide choisies parmi les azoles III. 1 à III. 18
- 1-[2RS, 4RS, 2RS, 4SR)-4-bromo-(2,4-dichlorophényl)tétrahydrofuryl]-1H-1,2,4-triazole (III.1)
- 2-(4-chlorophényl)-3-cyclopropyl-1-(1H-1,2,4-triazole-1-yl)-butane-2-ol (III.2)
- (±)-4-chloro-4-[4-méthyl-2-(1H-1,2,4-triazole-1-yl-méthyl)-1,3-dioxolane-2-yl]-phényl-4-chlorophényléther (III.3)
- (E)-(R,S)-1-(2,4-dichloro-phényl)-4,4-diméthyl-2-(1H-1,2,4-triazole-1-yl)pent-1-ène-3-ol (III.4)
- (Z)-2-(1H-1,2,4-triazole-1-yl-méthyl)-2-(4-fluorophényl)-3-(2-chlorophényl)-oxirane (III.5)
- 4-(4-chlorophényl)-2-(phényl-2-( 1H-1,2,4-triazolylméthyl)-butyronitrile (III.6)
- 3-(2,4-dichlorophényl)-6-fluoro-2-( 1H-1,2,4-triazole-1-yl)quinazoline-4(3H)-one (III.7)
- bis(4-fluorophényl)(méthyl)(1H-1,2,4-triazole-1-ylméthyl)silane (III.8)
- (R,S)-2-(2,4-dichlorophényl)-1-(1H-1,2,4-triazole-1-yl)-hexane-2-ol (III.9)
- 1-[2RS, 4RS, 2RS, 4SR)-5-(4-chlorobenzyl)-2,2-dimenthyl-1-(1H-1,2,4-triazole-1-ylméthyl)cyclopentanol (III. 10)
- N-propyl-N-[2-(2,4,6-trichloro-phénoxy)éthyl]imidazole-1-carboxamide (III. 11)
- (±)-1-[2-(2,4-dichloro-phényl)-4-propyl-1,3-dioxalane-2-ylméthyl]-1H-1,2,4-triazole (III.12)
- (R,S)-1-(4-chlorophényl)-4,4-diméthyl-3-(1H-1,2,4-triazole-1-ylméthyl)-pentane-3-ol (III.132)
- (±)-2-(2,4-dichloro-phényl)-3-(1H-1,2,4-triazol-yl)-propyl-1,1,2,2-tétrafluoroéthyléther (III.14) et
- (E)-1-[1-[[4-chloro-2-(trifluorométhyl)-phényl]imino]-2-propoxyéthyl]-1H-imidazole (III.15)
- Alcool (RS)-2,4'-difluoro-α-(1H-1,2,4-triazole-1-yl-méthyl)-benzhydrylique (III.16)
- 2-p-chlorophényl-2-(1H-1,2,4-triazole-1-ylméthyl)-hexanenitrile (III.17)
- 1-(2,4-dichloro-β-propylphénéthyl)-1H-1,2,4-triazole (III.18) et/ou
b₃) esters d'acide benzoïque de formule générale IV 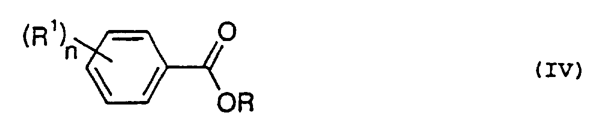 où les substituants ont les significations suivantes:
n une valeur de 0 à 3
R alkyle en C₁-C₈, aryle en C₆-C₁₄, aryle(C₆-C₁₄)alkyle(C₁-C₈)
R¹ hydrogène, alkyle en C₁-C₈, aryle en C₆-C₁₄, aryle(C₆-C₁₄)alkyle(C₁-C₈), halogéno, alcoxy en C₁-C₆.

2. Emulsions de suspensions aqueuses à plusieurs phases selon la revendication 1, contenant 5 à 15% en poids d'une substance active de formules III.9, III.12 et/ou III.18.

3. Emulsions de suspensions aqueuses à plusieurs phases selon la revendication 1 ou 2, **caractérisées par le fait que** la masse volumique de la phase huile des composants contenus dans l'émulsion b) se situe dans l'intervalle de 0,95 à 1,05 g/cm³.

4. Emulsions de suspensions aqueuses à plusieurs phases selon l'une des revendications 1 à 3, contenant dans le composant b un mélange d'une substance active de formule II et d'une substance active azole choisie parmi III.9, III.12 et III.18 dans le rapport en poids de 1,5:1 à 5<.1.

5. Utilisation des émulsions de suspensions aqueuses à plusieurs phases diluées avec de l'eau selon l'une des revendications 1 à 4 pour le traitement du bois contre les champignons nuisibles pour le bois, par pulvérisation, noyage, immersion ou d'autres procédés connus en soi.

6. Utilisation des émulsions en suspensions aqueuses à plusieurs phases diluées avec de l'eau selon l'une des revendications 1 à 4 comme fongicides dans la protection des plantes.
